# EUROPEAN PATENT APPLICATION

(11) **EP 4 583 474 A1**
(43) Date of publication of application: **09.07.2025**
(21) Application number: 23859260.4
(22) Date of filing: 25.08.2023
(51) Int. Cl.: H04L 27/26

(54) **WAVEFORM CONFIGURATION METHOD, CHIP, AND ELECTRONIC DEVICE**

(30) Priority: 30.08.2022 CN 202211044565
(71) Applicant: Beijing Unisoc Communications Technology Co., Ltd, Beijing 100083 (CN)
(72) Inventor: ZHOU, Huan, Beijing 100083 (CN); WANG, Hualei, Beijing 100083 (CN)
(74) Representative: Mewburn Ellis LLP
(86) International application number: PCT/CN2023/114952
(87) International publication number: WO 2024/046227

(57) **Abstract**

Embodiments of the present disclosure provide a method for an uplink (UL) shared channel waveform configuration, a chip, and an electronic device. The method is performed by a terminal and includes the following. A UL shared channel waveform type is determined according to received first information, where the UL shared channel waveform type includes discrete Fourier transform-spread-orthogonal frequency division multiplexing (DFT-s-OFDM) and cyclic prefix orthogonal frequency division multiplexing (CP-OFDM), and the first information is downlink control information (DCI) or a media access control-control element (MAC-CE). According to the method of embodiments of the present disclosure, the UL shared channel waveform type can be dynamically configured, thereby improving the flexibility of the waveform type configuration.

## Description

### CROSS-REFERENCE TO RELATED APPLICATION(S)

This application claims priority to and the benefit of Chinese patent application No. 202211044565.0, filed August 30, 2022 and entitled "METHOD FOR WAVEFORM CONFIGURATION, CHIP, AND ELECTRONIC DEVICE", the entire disclosure of which is hereby incorporated by reference.

### TECHNICAL FIELD

This disclosure relates to the field of communication technology, in particular to a method for an uplink (UL) shared channel waveform configuration, a chip, and an electronic device.

### BACKGROUND

Discrete Fourier transform-spread-orthogonal frequency division multiplexing (DFT-s-OFDM) and cyclic prefix orthogonal frequency division multiplexing (CP-OFDM) are two different types of waveforms. In an application scenario of 5G new radio (NR), an NR system can perform uplink (UL) transmission by using DFT-s-OFDM or CP-OFDM according to actual situations.

In the NR system, a physical uplink shared channel (PUSCH) can be configured, so as to realize a UL shared channel waveform type configuration. However, scheduling and a configured grant-PUSCH (CG-PUSCH) are configured by a higher-layer signaling transform precoder (*transformPrecoder*)*.* Therefore, for a UL shared channel, a UL shared channel waveform type is a static configuration and cannot be changed dynamically.

Therefore, a method for the UL shared channel waveform configuration is required, so as to dynamically configure a UL shared channel waveform.

### SUMMARY

For the problem of how to configure an uplink (UL) shared channel waveform in the prior art, the present disclosure provides a method for a UL shared channel waveform configuration, a chip, and an electronic device, and further provides a computer-readable storage medium.

Embodiments of the present disclosure adopt the following technical solutions.

In a first aspect, the present disclosure provides a method for a UL shared channel waveform configuration. The method is performed by a terminal and includes the following. A UL shared channel waveform type is determined according to received first information, where the UL shared channel waveform type includes discrete Fourier transform-spread-orthogonal frequency division multiplexing (DFT-s-OFDM) and cyclic prefix orthogonal frequency division multiplexing (CP-OFDM), and the first information is downlink control information (DCI) or a media access control-control element (MAC-CE).

According to the method of the first aspect, the UL shared channel waveform type can be dynamically configured, thereby improving the flexibility of the waveform type configuration.

In an implementation of the first aspect, the first information is DCI for scheduling data transmission. The UL shared channel waveform type is determined according to the received first information as follows. The UL shared channel waveform type is determined according to a time-domain resource assignment field of the first information.

In an implementation of the first aspect, the UL shared channel waveform type is determined according to the time-domain resource assignment field of the first information as follows. A UL shared channel waveform type of a physical uplink shared channel (PUSCH) dynamically scheduled by the first information is determined according to the time-domain resource assignment field of the first information.

In an implementation of the first aspect, the UL shared channel waveform type is determined according to the time-domain resource assignment field of the first information as follows. A UL shared channel waveform type of a configured grant-PUSCH (CG-PUSCH) is determined according to the time-domain resource assignment field of the first information.

According to the implementation of the first aspect, without increasing additional DCI overhead, through configuration and time-domain resource assignment information, both a time-domain resource(s) and waveform information can be obtained from time-domain resource assignment indication information.

In an implementation of the first aspect, the first information is group common DCI containing a radio network temporary identifier (RNTI), where the RNTI identifies that the first information is group common DCI indicating the UL shared channel waveform type. The UL shared channel waveform type is determined according to the received first information as follows. A UL shared channel waveform type of a first waveform area is determined according to the first information.

According to the implementation of the first aspect, a dedicated DCI format is adopted to introduce a new type of RNTI. With the dedicated DCI format, rapid waveform switching can be performed for multiple terminal devices in multiple cells at the same time.

In an implementation of the first aspect, for a Type-1 CG-PUSCH or a Type-2 CG-PUSCH, a bit indicating the UL shared channel waveform type is read from the first information during initial transmission according to a waveform type indication start position and a waveform type indication bit length that are indicated by a higher-layer signaling, and a UL shared channel waveform type of the CG-PUSCH is determined.

In an implementation of the first aspect, a start position of the first waveform area is after the last symbol of the first information, or the start position of the first waveform area is after the last symbol of a first symbol group after the last symbol of the first information.

In an implementation of the first aspect, the first symbol group is higher-layer signaling indication, or the first symbol group is terminal capability reporting information, or the length of the first symbol group is a first value, and the first value is a preset fixed value.

In an implementation of the first aspect, the length of the first waveform area is a first length, where the first length is a length configured by the higher-layer signaling indication, or the first length is a preset fixed value.

In an implementation of the first aspect, the first information is the DCI, the first information includes a waveform type indication field, the value of a frequency-domain resource assignment field of the first information is a first preset value, and the first preset value indicates that the first information is DCI indicating the UL shared channel waveform type. The UL shared channel waveform type is determined according to the received first information as follows. The UL shared channel waveform type is determined according to the value of the waveform type indication field of the first information.

According to the implementation of the first aspect, based on an existing DCI format, in the DCI, when a certain field is set to a special value, other fields can indicate the waveform information. As such, the existing DCI design can be used and there is no need to design a new DCI format.

In an implementation of the first aspect, for a Type-1 CG-PUSCH or a Type-2 CG-PUSCH, a UL shared channel waveform type of the CG-PUSCH is determined according to a retransmission time of the CG-PUSCH during retransmission.

In an implementation of the first aspect, for different UL shared channel waveform types, the length of an indication field in DCI for scheduling data transmission is the same, where the length of the indication field is a maximum bit length among bit lengths corresponding to the different UL shared channel waveform types, and the indication field includes at least one of a precoding information and number of layers field, a phase tracking reference signal-demodulation reference signal (PTRS-DMRS) association field, or an antenna port field.

In an implementation of the first aspect, for different UL shared channel waveform types, the total length of DCI for scheduling data transmission is the same.

In an implementation of the first aspect, the first information is the MAC-CE, and the first information at least includes a first bit corresponding to a first cell. The UL shared channel waveform type is determined according to the received first information as follows. A UL shared channel waveform type adopted for a current bandwidth part (BWP) of the first cell is determined according to the first bit.

In an implementation of the first aspect, the first information at least further includes a second bit corresponding to a second cell. The UL shared channel waveform type is determined according to the received first information further as follows. A UL shared channel waveform type adopted for a current BWP of the second cell is determined according to the second bit.

In an implementation of the first aspect, the first information is the MAC-CE, the first information at least contains a first cell identifier (ID), a first BWP ID, and first waveform type indication information, and a BWP corresponding to the first BWP ID is a BWP of a cell corresponding to the first cell ID. The UL shared channel waveform type is determined according to the received first information as follows. A UL shared channel waveform type of the BWP corresponding to the first BWP ID of the cell corresponding to the first cell ID is determined according to the first waveform type indication information, the first cell ID, and the first BWP ID.

According to the implementation of the first aspect, waveform indication of multiple cells can be carried in one MAC-CE, thereby reducing signaling overhead.

In an implementation of the first aspect, the first information at least further contains a second BWP ID and second waveform type indication information, and a BWP corresponding to the second BWP ID is a BWP of the cell corresponding to the first cell ID. The UL shared channel waveform type is determined according to the received first information as follows. A UL shared channel waveform type of the BWP corresponding to the second BWP ID of the cell corresponding to the first cell ID is determined according to the second waveform type indication information and the second BWP ID.

In an implementation of the first aspect, the first information is the MAC-CE, and the first information at least contains a first cell ID and first waveform type indication information. The UL shared channel waveform type is determined according to the received first information as follows. UL shared channel waveform types of all BWPs of a cell corresponding to the first cell ID are determined according to the first waveform type indication information and the first cell ID.

In a second aspect, the present disclosure provides a method for a UL shared channel waveform configuration. The method is performed by a base station (BS) and includes the following. First information is output, where the first information indicates a UL shared channel waveform type, the first information is DCI or an MAC-CE, and the UL shared channel waveform type includes DFT-s-OFDM and CP-OFDM.

In an implementation of the second aspect, the first information is DCI for scheduling data transmission, and a time-domain resource assignment field of the first information contains indication information indicating the UL shared channel waveform type.

In an implementation of the second aspect, the first information is group common DCI containing an RNTI, where the RNTI identifies that the first information is group common DCI indicating the UL shared channel waveform type, and the first information indicates a UL shared channel waveform type of a first waveform area.

In an implementation of the second aspect, the first information is the DCI, the first information includes a waveform type indication field, the value of a frequency-domain resource assignment field of the first information is a first preset value, and the first preset value indicates that the first information is DCI indicating the UL shared channel waveform type. The waveform type indication field of the first information indicates the UL shared channel waveform type.

In an implementation of the second aspect, the first information is the MAC-CE, and the first information at least includes a first bit corresponding to a first cell. The first bit indicates a UL shared channel waveform type adopted for a current BWP of the first cell.

In an implementation of the second aspect, the first information at least further includes a second bit corresponding to a second cell. The second bit indicates a UL shared channel waveform type adopted for a current BWP of the second cell.

In an implementation of the second aspect, the first information is the MAC-CE, the first information at least contains a first cell ID, a first BWP ID, and first waveform type indication information, and a BWP corresponding to the first BWP ID is a BWP of a cell corresponding to the first cell ID. The first waveform type indication information indicates a UL shared channel waveform type of the BWP corresponding to the first BWP ID of the cell corresponding to the first cell ID.

In an implementation of the second aspect, the first information at least further contains a second BWP ID and second waveform type indication information, and a BWP corresponding to the second BWP ID is a BWP of the cell corresponding to the first cell ID. The second waveform type indication information indicates a UL shared channel waveform type of the BWP corresponding to the second BWP ID of the cell corresponding to the first cell ID.

In an implementation of the second aspect, the first information is the MAC-CE, and the first information at least contains a first cell ID and first waveform type indication information. The first waveform type indication information indicates UL shared channel waveform types of all BWPs of the cell corresponding to the first cell ID.

In a third aspect, the present disclosure provides an electronic chip. The electronic chip includes a processor. The processor is configured to execute computer program instructions stored in a memory, where the computer program instructions, when executed by the processor, trigger the electronic chip to perform the method of the first aspect.

In a fourth aspect, the present disclosure provides an electronic chip. The electronic chip includes a processor. The processor is configured to execute computer program instructions stored in a memory, where the computer program instructions, when executed by the processor, trigger the electronic chip to perform the method of the second aspect.

In a fifth aspect, the present disclosure provides an electronic device. The electronic device includes a memory, a processor, and a communication apparatus. The memory is configured to store computer program instructions. The processor is configured to execute the computer program instructions which, when executed by the processor, trigger the electronic device to perform the method of the first aspect.

In a sixth aspect, the present disclosure provides an electronic device. The electronic device includes a memory, a processor, and a communication apparatus. The memory is configured to store computer program instructions. The processor is configured to execute the computer program instructions which, when executed by the processor, trigger the electronic device to perform the method of the second aspect.

In a seventh aspect, the present disclosure provides a computer-readable storage medium. The computer-readable storage medium is configured to store a computer program which, when executed on a computer, causes the computer to perform the method of the first aspect or the second aspect.

According to the technical solutions provided in embodiments of the present disclosure, at least the following technical effects can be implemented.

According to the method of embodiments of the present disclosure, the UL shared channel waveform type can be dynamically configured, thereby improving the flexibility of the waveform type configuration.

### BRIEF DESCRIPTION OF THE DRAWINGS

FIG. 1 is a schematic diagram of an application scenario according to embodiments of the present disclosure.
FIG. 2 is a flowchart of data interaction of a method according to embodiments of the present disclosure.
FIG. 3 is a schematic diagram of a time-domain waveform of a method according to embodiments of the present disclosure.
FIG. 4 is a schematic diagram of group common downlink control information (DCI) of a method according to embodiments of the present disclosure.
FIG. 5 is a schematic diagram of group common DCI of a method according to embodiments of the present disclosure.
FIG. 6 is a schematic diagram of a media access control-control element (MAC-CE) of a method according to embodiments of the present disclosure.
FIG. 7 is a schematic diagram of an MAC-CE of a method according to embodiments of the present disclosure.
FIG. 8 is a schematic diagram of an MAC-CE of a method according to embodiments of the present disclosure.
FIG. 9 is a schematic structural diagram of an electronic device according to an embodiment of the present disclosure.

### DETAILED DESCRIPTION

To make objectives, technical solutions, and advantages of the present disclosure clearer, the following will describe technical solutions of embodiments of the present disclosure clearly and completely with reference to specific embodiments of the present disclosure and accompanying drawings. Apparently, the embodiments described herein are merely some embodiments, rather than all embodiments, of the present disclosure. Based on embodiments of the present disclosure, all other embodiments obtained by those of ordinary skill in the art without creative effort shall fall within the protection scope of the disclosure.

Terms used in the detailed description of the present disclosure are merely intended to explain embodiments of the present disclosure rather than limiting the present disclosure.

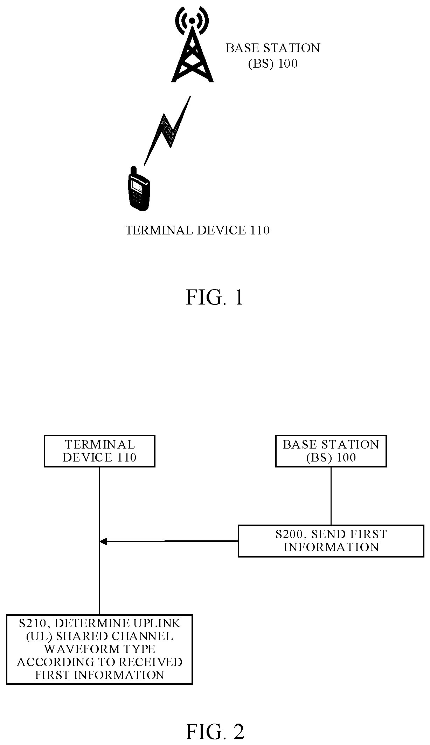

The present disclosure provides a method for an uplink (UL) shared channel waveform configuration. Specifically, FIG. 1 is a schematic diagram of an application scenario according to embodiments of the present disclosure. A terminal device 110 is connected to a base station (BS) 100, and the BS 100 can send the terminal device 110 information indicating a UL shared channel waveform type.

FIG. 2 is a flowchart of data interaction of a method according to embodiments of the present disclosure. The BS 100 and the terminal device 110 illustrated in FIG. 1 implement a UL shared channel waveform configuration based on the process illustrated in FIG. 2.

S200, the BS 100 sends the terminal device 110 first information.

S210, the terminal device 110 determines a UL shared channel waveform type according to the received first information.

Specifically, the UL shared channel waveform type includes discrete Fourier transform-spread-orthogonal frequency division multiplexing (DFT-s-OFDM) and cyclic prefix orthogonal frequency division multiplexing (CP-OFDM), and the first information is downlink control information (DCI). According to the method of embodiments of the present disclosure, the UL shared channel waveform type can be dynamically configured, thereby improving the flexibility of the waveform type configuration.

In actual application scenarios, the first information may adopt various data structures. The following examples describe various implementations in which the UL shared channel waveform type is indicated by the first information.

Specifically, in an NR system, a network (the BS) sends DCI to the terminal device, so as to schedule a physical downlink shared channel (PDSCH). The network (the BS) indicates, in the DCI, which downlink (DL) time domain setting is to be used by the terminal device to receive the PDSCH. Based on the DCI, dynamic scheduling of the PDSCH can be achieved. Therefore, in one or more implementations, the first information is the DCI.

### Implementation 1

In an implementation, at S200, the first information sent by the BS 100 is DCI (first DCI) for scheduling data transmission, and a time-domain resource assignment field of the first DCI contains indication information indicating the UL shared channel waveform type. In this case, without increasing additional DCI overhead, through configuration and the time-domain resource assignment information, both a time-domain resource(s) and waveform information can be obtained from time-domain resource assignment indication information.

At S210, the terminal device 110 determines the UL shared channel waveform type according to the time-domain resource assignment field of the first DCI for scheduling data transmission.

In an embodiment, at S210, the terminal device 110 determines, according to the time-domain resource assignment field of the first DCI for scheduling data transmission, a UL shared channel waveform type of a PUSCH dynamically scheduled by the first DCI.

In a certain row of the time-domain resource assignment field, in addition to a slot offset K0, a start and length indicator (SLIV) (or a direct representation of a start symbol *S* and an assignment length *L*), and a mapping type for PUSCH reception that are currently defined, a UL waveform type is also indicated, i.e., whether the DFT-s-OFDM waveform or the CP-OFDM waveform is adopted for current transmission.

For example, information indicating the waveform type is defined in the time-domain resource assignment information. When the bit is 1, the waveform type is CP-OFDM, and when the bit is 0, the waveform type is DFT-s-OFDM.

In an embodiment, time-domain resource assignment information of multiple different DCI can contain the following information content as illustrated in Table 1.

**Table 1**

| Row index | slot offset | Waveform type | Start position S and length *L* | |
|---|---|---|---|---|
| 0 | 0 | 1 | 0 | 13 |
| 1 | 0 | 0 | 0 | 13 |
| 2 | 0 | 1 | 7 | 7 |
| ... | | | | |

Further, in another embodiment, at S210, the terminal device 110 determines a UL shared channel waveform type of a configured grant-PUSCH (CG-PUSCH) according to the time-domain resource assignment field of the first DCI for scheduling data transmission.

Specifically, considering that a Type-1 CG-PUSCH does not have DCI, when the Type-1 CG-PUSCH is adopted, a waveform type of the time-domain resource assignment configured by a higher-layer signaling is a waveform of the CG-PUSCH.

Further, considering that a Type-2 CG-PUSCH has activated DCI, when the Type-2 CG-PUSCH is adopted, a waveform type of the time-domain resource assignment of the activated DCI is a waveform of the CG-PUSCH.

Further, for a Type-1 CG-PUSCH or a Type-2 CG-PUSCH, a UL shared channel waveform type of the CG-PUSCH is determined according to a retransmission time of the CG-PUSCH during retransmission.

### Implementation 2

In another implementation, at S200, the first information sent by the BS 100 is DCI, and a data structure of the first information is based on a data structure of the DCI for scheduling data transmission.

Specifically, on the basis of the data structure of the DCI for scheduling data transmission, an indication field indicating the waveform type is added into the first information. For example, a waveform type indication field of one bit is added. When the value of the waveform type indication field is 1, it indicates that the UL shared channel waveform type is CP-OFDM. When the value of the waveform type indication field is 0, it indicates that the UL shared channel waveform type is DFT-s-OFDM. Based on the existing DCI format, in the DCI, when a certain field is set to a special value, other fields can indicate the waveform information. As such, the existing DCI design can be used and there is no need to design a new DCI format.

Further, in an embodiment, a frequency-domain resource assignment field of the DCI indicates whether the DCI is the first information. For example, when a frequency-domain resource assignment field of DCI with the data structure of the DCI for data scheduling is a preset value or any one of multiple preset values, the DCI is the first information indicating the UL shared channel waveform type, and there is no data scheduling based on the DCI. When the frequency-domain resource assignment field of the DCI is not the preset value or any one of the multiple preset values, the DCI is the DCI for data scheduling.

Specifically, at S200, the first information sent by the BS 100 is DCI, the first information includes a waveform type indication field, and the value of the frequency-domain resource assignment field of the first information is a first preset value (for example, all set to 0 or all set to 1). When the value of the frequency-domain resource assignment field is the first preset value, it indicates that DCI containing the frequency-domain resource assignment field is DCI indicating the UL shared channel waveform type.

At S210, after the first information is received by the terminal device 100, the terminal device 110 identifies that the value of the frequency-domain resource assignment field of the first information is the first preset value, and then determines that the first information is the DCI indicating the UL shared channel waveform type. The terminal device 110 determines the UL shared channel waveform type according to the value of the waveform type indication field of the first information.

Further, in an embodiment, the frequency-domain resource assignment field of the first information also indicates an object of the UL shared channel waveform type. For example, when only Type 0/2 resource allocation is supported, the frequency-domain resource assignment field is all set to 0. When only Type 1 resource assignment is supported, the frequency-domain resource assignment field is all set to 1. When dynamic switching of Type 0 resource allocation and Type 1 resource allocation is supported, the frequency-domain resource assignment field is all set to 0, or all set to 1.

### Implementation 3

In another implementation, at S200, the first information sent by the BS 100 is group common DCI.

Specifically, the group common DCI is introduced to indicate whether the UL waveform is DFT-s-OFDM or CP-OFDM. For example, a new radio network temporary identifier (RNTI), such as referred to as a waveform radio network temporary identifier (WF-RNTI), is configured by a higher-layer signaling. The WF-RNTI identifies that the group common DCI is the DCI indicating the UL shared channel waveform type. A dedicated DCI format is adopted to introduce a new type of RNTI. With the dedicated DCI format, rapid waveform switching can be performed for multiple terminal devices in multiple cells at the same time. The BS 100 sends the terminal device 110 group common DCI (second DCI) containing the WF-RNTI, and the second DCI contains information indicating the waveform type.

After the group common DCI (the second DCI) sent by the BS 100 is received by the terminal device 110, the terminal device 110 identifies whether the group common DCI contains the WF-RNTI. If the group common DCI contains the WF-RNTI, it means that the second DCI indicates the UL shared channel waveform type. The terminal device 110 determines a UL shared channel waveform type of a first waveform area according to the second DCI.

Specifically, in an embodiment, a start position of the first waveform area is after the last symbol of the second DCI, or the start position of the first waveform area is after the last symbol of a first symbol group after the last symbol of the second DCI. The first symbol group is higher-layer signaling indication, or the first symbol group is terminal capability reporting information, or the length of the first symbol group is a first value, and the first value is a preset fixed value.

The length of the first waveform area is a first length, where the first length is a length configured by higher-layer signaling indication, or the first length is a preset fixed value.

For example, the BS 100 configures the start position of the first waveform area and the length of the first waveform area for the terminal device 110 through a higher-layer signaling. After several symbols (the start position of the first waveform area configured by the BS 100) subsequent to the last symbol of the second DCI is received by the terminal device 110, the terminal device 110 determines, according to waveform type indication of the second DCI, whether UL shared channel waveform types of several subsequent bits (the length of the first waveform area configured by the BS 100) is DFT-s-OFDM or CP-OFDM.

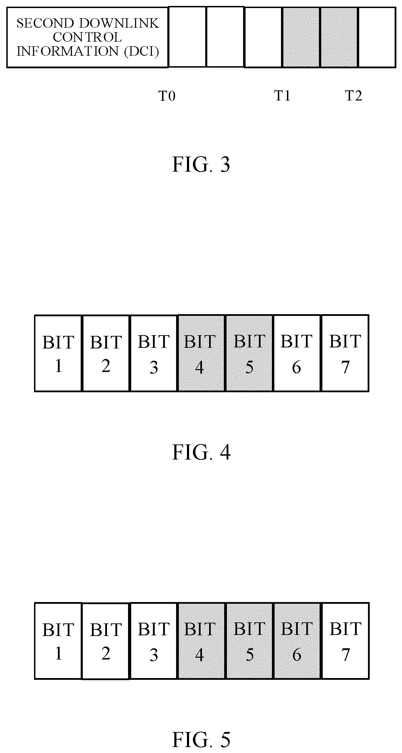

For example, FIG. 3 is a schematic diagram of a time-domain waveform of a method according to embodiments of the present disclosure.

Assume that the BS 100 configures for the terminal device 110 through a higher-layer signaling that the start position of the first waveform area is 3 and the length of the first waveform area is 2. As illustrated in FIG. 3, after the second DCI is received by the terminal device 110, start from three symbols (one square represents one bit, T0-T1) subsequent to the last symbol (position T0) of the second DCI received, the terminal device 110 determines, according to indication of the second DCI, whether UL shared channel waveform types of 2 subsequent bits (gray squares, T1-T2) is DFT-s-OFDM or CP-OFDM.

Further, in another embodiment, the BS 100 configures the total length of group common DCI indicating a UL transmission waveform type, a waveform type indication start position, and a waveform type indication bit length for the terminal device 110 through a higher-layer signaling. After the terminal device 110 determines that the group common DCI (the second DCI) contains the WF-RNTI, the terminal device 110 determines a bit indicating the UL shared channel waveform type according to the total length of the group common DCI indicating the UL transmission waveform type, the waveform type indication start position, and the waveform type indication bit length that are configured by the BS 100, and then identifies indication information for the UL shared channel waveform type from the second DCI.

For example, FIG. 4 is a schematic diagram of group common DCI of a method according to embodiments of the present disclosure.

The BS 100 configures for the terminal device 110 through a higher-layer signaling that the total length of the group common DCI indicating the UL transmission waveform type is 7 bits, the waveform type indication start position is 3, and the waveform type indication bit length is 2. As illustrated in FIG. 4, one square represents one bit, and the total length of group common DCI 201 is 7 bits (7 squares). From bit 3 (the third bit) (the start position is 3), 2 subsequent bits (the waveform type indication bit length is 2), bit 4 and bit 5, are bits indicating the UL shared channel waveform type.

In another embodiment, the BS 100 further configures, in the group common DCI indicating the UL transmission waveform type, an indication target of a bit indicating the UL shared channel waveform type for the terminal device 110 through the higher-layer signaling.

Taking CG-PUSCH as an example, the BS 100 also configures for the terminal device 110, through a higher-layer signaling, the total length of the group common DCI indicating the UL transmission waveform type, the waveform type indication start position, the waveform type indication bit length, and the position of a waveform type indication bit for CG-PUSCH.

The terminal device 110 determines a bit indicating the UL shared channel waveform type in the second DCI according to the total length of the group common DCI indicating the UL transmission waveform type, the waveform type indication start position, and the waveform type indication bit length. The terminal device 110 determines a bit for CG-PUSCH from the bits indicating the UL shared channel waveform type according to the position of the waveform type indication bit for the CG-PUSCH configured by the terminal device 110, and then determines a UL shared channel waveform type for CG-PUSCH.

For example, FIG. 5 is a schematic diagram of group common DCI of a method according to embodiments of the present disclosure.

The BS 100 configures for the terminal device 110 through a higher-layer signaling that the total length of the group common DCI indicating the UL transmission waveform type is 7 bits, the waveform type indication start position is 3, the waveform type indication bit length is 3, and the position of the waveform type indication bit for CG-PUSCH is the second bit of the three bits. As illustrated in FIG. 5, one square represents one bit, and the total length of group common DCI 201 is 7 bits (7 squares). From bit 3 (the third bit) (the start position is 3), 3 subsequent bits (the waveform type indication bit length is 3), bit 4 to bit 6, are bits indicating the UL shared channel waveform type, and bit 5 (the second of the three bits) in bit 4 to bit 6 is the indication bit for CG-PUSCH.

Further, in the above solutions where the first information is the DCI (Implementation 1 to Implementation 3), the length of an indication field related to the UL shared channel waveform can be determined by UE-specific DCI size alignment.

Specifically, in an embodiment, for different UL shared channel waveform types, the length of an indication field in DCI for scheduling data transmission is the same, where the length of the indication field is the maximum bit length among bit lengths corresponding to the different UL shared channel waveform types, and the indication field includes at least one of a precoding information and number of layers field, a phase tracking reference signal-demodulation reference signal (PTRS-DMRS) association field, or an antenna port field. For example, under two configurations for DFT-s-OFDM and CP-OFDM, the maximum bit length among the precoding information and number of layers field, the PTRS-DMRS association field, and the antenna port field is used.

Specifically, in another embodiment, for different UL shared channel waveform types, the total length of the DCI for scheduling data transmission is the same. For example, under two waveform configurations for DFT-s-OFDM and CP-OFDM, the total length of DCI is aligned. If the DCI length is 60 bits for CP-OFDM and 62 bits for DFT-s-OFDM, the DCI length is unified to 62 bits, and the length of a smaller DCI (DCI with the length of 60 bits) is padded to 62 bits, that is, 2 bits of 0 are padded at the end of the DCI. As such, regardless of the DFT-s-OFDM waveform or the CP-OFDM waveform, the DCI length is the same.

In an embodiment, for initial transmission of a Type-1 CG-PUSCH or a Type-2 CG-PUSCH, a UL shared channel waveform type of CG-PUSCH is determined based on the group common DCI (the second DCI in Implementation 3).

In an embodiment, for retransmission of the Type-1 CG-PUSCH and the Type-2 CG-PUSCH, the UL shared channel waveform type of CG-PUSCH is determined based on the DCI for data scheduling (the first DCI in Implementation 1 or the DCI containing the waveform type indication field in Implementation 2). Alternatively, the UL shared channel waveform type of CG-PUSCH is determined based on the group common DCI (the second DCI in Implementation 3).

Further, if dynamic waveform indication is supported, waveform type information obtained from the position of a retransmission waveform of the CG-PUSCH indicated in the DCI is adopted for the retransmission. Meanwhile, other related parameters are also changed.

For example, if the waveform type changes, a dynamic scheduled parameter is adopted for related parameter configurations. Parameters indicated in the DCI are adopted for p0-nominal without grant (*p0-NominalWithoutGrant*)*,* p0-PUSCH-Alpha (*p0-PUSCH-Alpha*)*,* power control loop to use (*powerControlLoopToUse*), path loss reference index (*pathlossReferenceIndex*), modulation and coding scheme table (*mcs-Table*), and MCS table transform precoder (*mcs-TableTransformPrecoder*)*.*

If the waveform type does not change, an existing mechanism is still used, that is, parameters configured by the higher-layer signaling are still adopted for the above parameters.

Further, in one or more implementations, the first information is a media access control-control element (MAC-CE).

### Implementation (4)

In another implementation, the first information includes one or more MAC-CEs. According to the method of embodiments of the present disclosure, waveform indication of multiple cells can be carried in one MAC-CE, thereby reducing signaling overhead.

Specifically, in an embodiment, a cell corresponding to the UL shared channel waveform type indicated by the first information is pre-configured.

The first information can indicate a UL shared channel waveform type adopted for a current bandwidth part (BWP) of one cell.

For example, at S200, the first information (MAC-CE) sent by the BS 100 at least includes a first bit corresponding to a first cell, and correspondence between the first cell and the first bit is pre-configured, for example, configured by a higher-layer signaling.

At S210, the terminal device 110 determines, according to the first bit of the first information, a UL shared channel waveform type adopted for a current BWP of the first cell. For example, when the first bit is 1, the waveform type adopted for the current BWP of the first cell is CP-OFDM, and when the first bit is 0, the waveform type adopted for the current BWP of the first cell is DFT-s-OFDM.

The first information can also indicate UL shared channel waveform types adopted for current BWPs of multiple different cells.

For example, at S200, the first information (MAC-CE) sent by the BS 100 at least includes a first bit corresponding to a first cell and a second bit corresponding to a second cell, and correspondence between the first cell and the first bit and correspondence between the second cell and the second bit are pre-configured.

At S210, the terminal device 110 determines, according to the first bit of the first information, a UL shared channel waveform type adopted for a current BWP of the first cell, and determines, according to the second bit of the first information, a UL shared channel waveform type adopted for a current BWP of the second cell. For example, when the first bit is 1, the waveform type adopted for the current BWP of the first cell is CP-OFDM, and when the first bit is 0, the waveform type adopted for the current BWP of the first cell is DFT-s-OFDM.

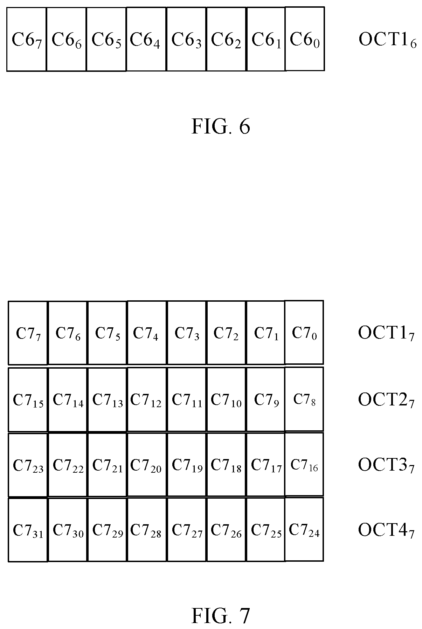

For example, FIG. 6 is a schematic diagram of an MAC-CE of a method according to embodiments of the present disclosure.

As illustrated in FIG. 6, an MAC-CE based on carrier OCT1₆ has 8 bits, and each bit corresponds to one cell (cell C6₇ to cell C6₀). When the value of a bit is 1, a UL shared channel waveform type adopted for a current BWP of a corresponding cell is CP-OFDM, and when the value of the bit is 0, the UL shared channel waveform type adopted for the current BWP of the corresponding cell is DFT-s-OFDM.

Further, when there are multiple carriers, an MAC-CE group is adopted to indicate the UL shared channel waveform type. Specifically, the MAC-CE group includes multiple MAC-CEs, and each MAC-CE in the MAC-CE group corresponds to one carrier.

For example, FIG. 7 is a schematic diagram of an MAC-CE of a method according to embodiments of the present disclosure.

As illustrated in FIG. 7, the MAC-CE group includes four MAC-CEs that are based on carrier OCT1₇ to carrier OCT4₇ respectively. Each MAC-CE has 8 bits, and each bit corresponds to one cell (cell C7₀ to cell C7₃₁).

In another embodiment, the correspondence between the UL shared channel waveform type indicated by the first information and the cell is indicated by the first information.

Specifically, the first information can indicate UL shared channel waveform types adopted for all BWPs of the first cell.

For example, at S200, the first information sent by the BS 100 at least further contains a cell ID of a first cell and first waveform type indication information.

At S210, the terminal device 110 determines, according to the first waveform type indication information and the cell ID of the first cell that are in the first information, the UL shared channel waveform types of all BWPs of the first cell.

The first information can also indicate a UL shared channel waveform type adopted for one BWP of the first cell.

For example, at S200, the first information sent by the BS 100 at least contains a cell ID of a first cell, a BWP ID of a first BWP, and first waveform type indication information for the first BWP. The first BWP is a BWP of the first cell.

At S210, the terminal device 110 determines, according to the first waveform type indication information, the cell ID of the first cell, and the BWP ID of the first BWP that are in the first information, a UL shared channel waveform type of the first BWP of the first cell.

The first information can also indicate UL shared channel waveform types adopted for multiple BWPs of the first cell.

For example, at S200, the first information sent by the BS 100 at least contains a cell ID of a first cell, a BWP ID of a first BWP, first waveform type indication information for the first BWP, a BWP ID of a second BWP, and second waveform type indication information of the second BWP. The first BWP and the second BWP are BWPs of the first cell.

At S210, the terminal device 110 determines, according to the first waveform type indication information, the cell ID of the first cell, and the BWP ID of the first BWP that are in the first information, a UL shared channel waveform type of the first BWP of the first cell. The terminal device 110 determines, according to the second waveform type indication information, the cell ID of the first cell, and the BWP ID of the second BWP in the first information, a UL shared channel waveform type of the second BWP of the first cell.

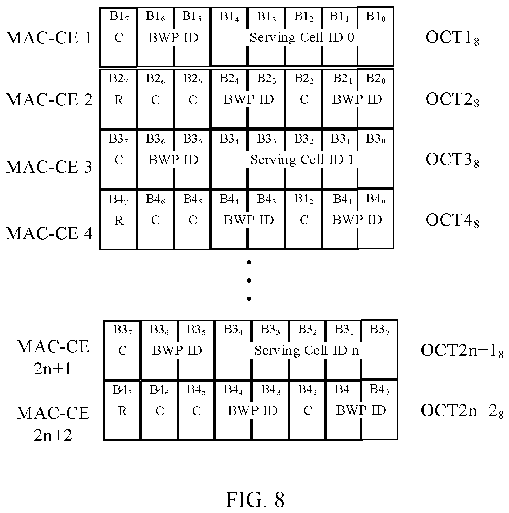

For example, FIG. 8 is a schematic diagram of an MAC-CE of a method according to embodiments of the present disclosure.

*2n+2* MAC-CEs are numbered from 1 to 2*n*+2*,* which are based on carrier OCT1₈ to carrier OCT2*n*+2₈ respectively, where n is an integer greater than 2. Every two MAC-CEs correspond to one cell.

In MAC-CE 1, the first bit (B1₇) indicates a UL shared channel waveform type (C), the second bit and the third bit (B1₆ and B1₅) indicate a BWP ID of a BWP corresponding to the UL shared channel waveform type indicated by B1₇, the fourth bit to the eighth bit (B1₄, B1₃, B1₂, B1₁, and B1₀) indicate a cell ID (Serving Cell ID 0) of a cell (cell No. 0) to which the BWP indicated by B1₆ and B1₅ belongs.

In MAC-CE 2, the first bit (B2₇) is a reserved bit, the third bit (B2₅) indicates a UL shared channel waveform type (C), the fourth bit and the fifth bit (B2₄ and B2₃) indicate a BWP ID of a BWP corresponding to the UL shared channel waveform type indicated by B2₅, and the BWP belongs to the cell (cell No. 0) corresponding to the cell ID indicated by the fourth bit to the eighth bit (B1₄, B1₃, B1₂, B1₁, and B1₀) in MAC-CE 1, the sixth bit (B2₂) indicates a UL shared channel waveform type (C), the seventh bit and the eighth bit (B2₁ and B2₀) indicate a BWP ID of a BWP corresponding to the UL shared channel waveform type indicated by B2₂, and the BWP belongs to the cell (cell No. 0) corresponding to the cell ID indicated by the fourth bit to the eighth bit (B1₄, B1₃, B1₂, B1₁, and B1₀) in MAC-CE 1.

In MAC-CE 3, the first bit (B3₇) indicates a UL shared channel waveform type (C), the second bit and the third bit (B3₆ and B3₅) indicate a BWP ID of a BWP corresponding to the UL shared channel waveform type indicated by B3₇, and the fourth bit to the eighth bit (B3₄, B3₃, B3₂, B3₁, B3₀) indicate a cell ID (Serving Cell ID 1) of a cell (cell No. 1) to which the BWP indicated by B3₆ and B3₅ belongs.

In MAC-CE 4, the first bit (B4₇) is a reserved bit, the third bit (B4₅) indicates a UL shared channel waveform type (C), the fourth bit and the fifth bit (B4₄ and B4₃) indicate a BWP ID of a BWP corresponding to the UL shared channel waveform type indicated by B4₂, and the BWP belongs to the cell (cell No. 1) corresponding to the cell ID indicated by the fourth bit to the eighth bit (B3₄, B3₃, B3₂, B3₁, B3₀) in MAC-CE 3, the sixth bit (B4₂) indicates a UL shared channel waveform type (C), the seventh bit and the eighth bit (B4₁ and B4₀) indicate a BWP ID of a BWP corresponding to the UL shared channel waveform type indicated by B4₂, and the BWP belongs to the cell (cell No. 1) corresponding to the cell ID indicated by the fourth bit to the eighth bit (B3₄, B3₃, B3₂, B3₁, B3₀) in MAC-CE 3.

The device proposed in embodiments of the present disclosure may be fully or partially integrated into a physical entity or may be physically separate. These modules may be all implemented in a form of software through processing element invoking, may be all implemented in a form of hardware, or may be partially implemented in a form of software through processing element invoking and partially implemented in a form of hardware. For example, a determining module may be a separate processing element or integrated into a chip of an electronic device. Implementation of other modules is similar. In addition, all or part of these modules may be integrated or implemented independently. During the implementation, each step or module of the foregoing methods may be implemented by an integrated logic circuit of hardware in a processing element or by using an instruction in a form of software.

For example, the above modules may be one or more integrated circuits configured to implement the above methods, such as one or more application-specific integrated circuits (ASIC), or one or more digital signal processors (DSP), one or more field programmable gate arrays (FPGA), etc. For another example, these modules may be integrated together and implemented in the form of a system-on-a-chip (SOC).

Further, based on the method provided in the present disclosure, an electronic device (terminal) is further provided in an embodiment of the present disclosure. The electronic device includes a memory configured to store computer program instructions, a processor configured to execute the computer program instructions, and a communication apparatus. The computer program instructions, when executed by the processor, trigger the electronic device to perform the UP shared channel waveform configuration implemented by the terminal in the method in embodiments of the present disclosure.

Further, based on the method for determining the transmission beam provided in the present disclosure, an electronic device (a BS) is further provided in an embodiment of the present disclosure. The electronic device includes a memory configured to store computer program instructions, a processor configured to execute the computer program instructions, and a communication apparatus. When the computer program instructions are executed by the processor, the processor controls the electronic device to perform the UP shared channel waveform configuration implemented by the server in the method in embodiments of the present disclosure.

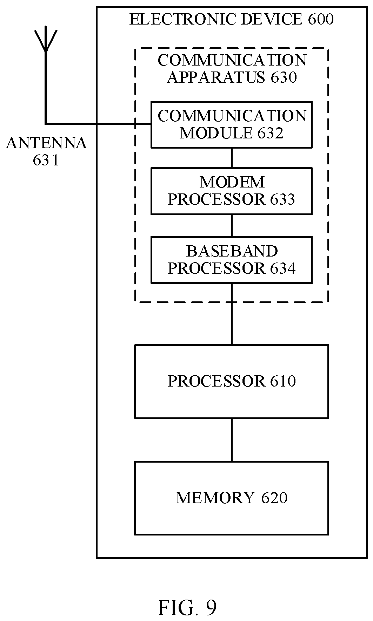

FIG. 9 is a schematic structural diagram of an electronic device according to an embodiment of the present disclosure. The electronic device (a terminal or a BS) in embodiments of the present disclosure can adopt the component structure illustrated in FIG. 9. As illustrated in FIG. 9, the electronic device 600 includes a processor 610, a memory 620, and a communication apparatus 630.

The memory 620 can be configured to store computer program instructions for performing the method in the above embodiment. When the processor 610 executes the computer program instructions stored in the memory 620, the processor 610 controls the communication apparatus 630 to perform the method in the above embodiment.

The processor 610 of the electronic device 600 can be an SOC. The processor 610 can include a central processing unit (CPU), or can include a processor of another type.

Specifically, the processor 610 can include, for example, a CPU, a DSP, a microcontroller, or a digital signal processor, or can include a GPU, an embedded neural network processing unit (NPU), and an image signal processor (ISP). The processor 610 can include a necessary hardware accelerator, a logic processing hardware circuit such as an ASIC, or one or more integrated circuits for controlling the execution of the program of the technical solutions of the present disclosure. In addition, the processor 610 can have a function of operating one or more software programs, and the software program can be stored in a storage medium.

The memory 620 of the electronic device 600 may be a read-only memory (ROM), another type of static storage device that can store static information and instructions, a random access memory (RAM), or another type of dynamic storage device that can store information and instructions; may be an electrically erasable programmable read-only memory (EEPROM), a compact disc read-only memory (CD-ROM), another optical disc storage, an optical disc storage (including a compact disc, a laser disc, an optical disc, a digital versatile disc, or a Blu-ray disc), a disk storage medium, or another magnetic storage device; or may be any computer-readable medium that can be used to carry or store desired program code in a form of an instruction or a data structure and can be accessed by a computer.

Specifically, in an embodiment of the present disclosure, the processor 610 and the memory 620 can be integrated into one processing apparatus. More generally, the processor 610 and the memory 620 are independent components. During implementation, the memory 620 may alternatively be integrated into the processor 610 or independent of the processor 610.

The communication apparatus 630 of the electronic device 600 is configured to implement a wireless communication function. The communication apparatus 630 includes one or more of an antenna 631, a communication module 632, a modem processor 633, and a baseband processor 634.

The antenna 631 is configured to transmit and receive electromagnetic wave signals. The antenna 631 can include one or more independent antennas, each of which may be configured to cover one or more communication frequency bands. Different antennas may further be multiplexed, to improve antenna utilization.

The communication module 632 can provide a solution, applicable to the electronic device 600, for wireless communication including 2G, 3G, 4G, 5G, etc. The mobile communications module 632 may include at least one filter, a switch, a power amplifier, a low noise amplifier (LNA), etc. The mobile communications module 632 can receive an electromagnetic wave through the antenna 631, perform processing such as filtering and amplification on the received electromagnetic wave, and transmit a processed electromagnetic wave to the modem processor 633 for demodulation. The mobile communications module 632 can further amplify a signal modulated by the modem processor 633, and convert an amplified signal into an electromagnetic wave for radiation through the antenna 631. In some embodiments, at least some function modules of the mobile communications module 632 can be disposed in the processor 610.

The modem processor 633 can include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor 734 for processing. After being processed by the baseband processor 734, the low-frequency baseband signal is transmitted to the processor 610. In some embodiments, the modem processor 633 can be an independent component. In some other embodiments, the modem processor 633 can be independent of the processor 610, and is disposed in a same device as the mobile communications module 732 or another function module.

In some embodiments, in the electronic device 600, the antenna 631 is coupled to the communications module 632, so that the electronic device 600 can communicate with a network and another device by using a wireless communications technology. The wireless communications technology can include a global system for mobile communications (GSM), a general packet radio service (GPRS), code division multiple access (CDMA), wideband code division multiple access (WCDMA), time-division code division multiple access (TD-SCDMA), long term evolution (LTE), Bluetooth (BT), a global navigation satellite system (GNSS), a wireless local area network (WLAN), a near field communication (NFC), frequency modulation (FM), an infrared (IR) technology, etc. The GNSS can include a global positioning system (GPS), a global navigation satellite system (GLONASS), a Beidou navigation satellite system (BDS), a quasi-zenith satellite system (QZSS), and/or a satellite-based augmentation system (SBAS).

Further, in actual application scenarios, the method flow of the embodiments illustrated in the present disclosure can be implemented by an electronic chip installed on the electronic device. Therefore, based on the method provided in the present disclosure, an electronic chip is further provided in an embodiment of the present disclosure. The electronic chip is installed in a BS. The electronic chip includes a memory configured to store computer program instructions and a processor configured to execute the computer program instructions. The computer program instructions, when executed by the processor, trigger the electronic chip to perform the operations implemented by the BS in the method in embodiments of the present disclosure.

Further, based on the method provided in the present disclosure, an electronic chip is further provided in an embodiment of the present disclosure. The electronic chip is installed in a terminal. The electronic chip includes a memory configured to store computer program instructions and a processor configured to execute the computer program instructions. The computer program instructions, when executed by the processor, trigger the electronic chip to perform the operations implemented by the terminal in the method in embodiments of the present disclosure.

Further, the devices, apparatus, and modules described in embodiments of the present disclosure may be specifically implemented by a computer chip or entity, or implemented by a product with a specific function.

Those skilled in the art should understand that embodiments of the present disclosure may be provided as a method, an apparatus, or a computer program product. Therefore, the present disclosure may use a form of hardware-only embodiments, software-only embodiments, or embodiments with a combination of software and hardware. Moreover, the present disclosure may be in a form of a computer program product that is implemented on one or more computer-usable storage media that include computer-usable program code.

In embodiments of the present disclosure, if implemented in a form of a software functional unit and sold or used as a stand-alone product, any function may be stored in a computer-readable storage medium. Based on this understanding, the technical solutions of the present disclosure essentially, or a part contributing to the prior art, or some of the technical solutions may be embodied in a form of a software product. The computer software product is stored on a storage medium, and includes several instructions to enable a computer device (which may be a personal computer, a server, a network device, etc.,) to perform all or some steps of the method in embodiments of the present disclosure.

A computer-readable storage medium is further provided in an embodiment of the present disclosure. The computer-readable storage medium is configured to store a computer program. The computer program, when executed on a computer, causes a computer to perform the method in embodiments of the present disclosure.

A computer program product is further provided in an embodiment of the present disclosure. The computer program product includes a computer program. The computer program, when executed on a computer, causes a computer to perform the method in embodiments of the present disclosure.

Embodiments of the present disclosure are described with reference to the flowcharts and/or block diagrams of the method, the device (apparatus), and the computer program product according to embodiments of the present disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, such that the instructions executed by a computer or a processor of another programmable data processing device generate an apparatus for implementing a specific function in one or more processes in the flowcharts and/or in one or more blocks in the block diagrams.

These computer program instructions may be stored in a computer-readable memory that can instruct a computer or another programmable data processing device to work in a specific manner, such that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, such that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It should be noted that, in embodiments of the present disclosure, the term "at least one" refers to one or more, and the terms "a plurality of" or "multiple" refer to two or more. The term "and/or" describes associations between associated objects, and it indicates three types of relationships. For example, *"A* and/or *B"* may indicate that *A* exists alone, *A* and *B* coexist, or *B* exists alone. *A* and *B* each may be singular or plural. The symbol "/" generally indicates that the associated objects are in an "or" relationship. The term "at least one of" or a similar expression refers to any combination of these items, including any combination of single items or plural items. For example, at least one of *a, b,* and c can represent: *a, b, c, a* and *b, a* and c, *b* and *c*, or *a, b,* and *c*, where *a, b,* and *c* may be singular or plural.

The terms "include", "comprise", "have", or any other variations thereof are intended to cover a non-exclusive inclusion, such that a process, method, product, or device including a series of elements not only includes those elements, but also includes other elements that are not explicitly listed, or also includes inherent elements of the process, method, product, or device. Without more restrictions, an element defined by the phrase "including a ... " does not exclude the presence of another same element in a process, method, product, or device that includes the element.

The present disclosure may be described in general contexts of computer-executable instructions executed by a computer, such as a program module. Generally, the program module includes a routine, a program, an object, a component, a data structure, etc., that perform specific tasks or implement specific abstract data types. The present disclosure may alternatively be practiced in a distributed computing environment in which a task is performed by a remote processing device connected through a communication network. In the distributed computing environment, the program module may be located in local and remote computer storage media including a storage device.

Embodiments in the present disclosure are described in a progressive manner. For same or similar parts between embodiments, reference may be made to each other. Each embodiment focuses on a difference from other embodiments. For an apparatus embodiment, since it is basically similar to the method embodiment, the description is relatively simple, and reference can be made to the description of the method embodiment.

Those of ordinary skill in the art may be aware that units and algorithm steps described in embodiments of the present disclosure can be implemented by electronic hardware or a combination of computer software and electronic hardware. Whether these functions are implemented in hardware or software depends on specific applications of the technical solutions and design constraints. A person skilled in the art may use different methods to implement the described functions for each specific application, but such implementation should not be considered to be beyond the scope of the present disclosure.

A person skilled in the art can clearly understand that, for convenience and brevity of description, reference may be made to corresponding processes in the foregoing method embodiment for specific working processes of the foregoing apparatuses and units. Details are not described herein again.

The above merely describes specific implementations of the present disclosure. Any person skilled in the art can easily conceive modifications or replacements within the technical scope of the present disclosure, and these modifications or replacements shall fall within the protection scope of the present disclosure. Therefore, the scope of the present disclosure should be subject to the scope of the claims.

## Claims

1. A method for an uplink (UL) shared channel waveform configuration, performed by a terminal and comprising:
determining a UL shared channel waveform type according to received first information, wherein the UL shared channel waveform type comprises discrete Fourier transform-spread-orthogonal frequency division multiplexing (DFT-s-OFDM) and cyclic prefix orthogonal frequency division multiplexing (CP-OFDM), and the first information is downlink control information (DCI) or a media access control-control element (MAC-CE).

2. The method of claim 1, wherein the first information is DCI for scheduling data transmission, and determining the UL shared channel waveform type according to the received first information comprises:
determining the UL shared channel waveform type according to a time-domain resource assignment field of the first information.

3. The method of claim 2, wherein determining the UL shared channel waveform type according to the time-domain resource assignment field of the first information comprises:
determining, according to the time-domain resource assignment field of the first information, a UL shared channel waveform type of a physical uplink shared channel (PUSCH) dynamically scheduled by the first information.

4. The method of claim 2, wherein determining the UL shared channel waveform type according to the time-domain resource assignment field of the first information comprises:
determining, according to the time-domain resource assignment field of the first information, a UL shared channel waveform type of a configured grant-PUSCH (CG-PUSCH).

5. The method of claim 1, wherein
the first information is group common DCI containing a radio network temporary identifier (RNTI), wherein the RNTI identifies that the first information is group common DCI indicating the UL shared channel waveform type; and
determining the UL shared channel waveform type according to the received first information comprises:
determining a UL shared channel waveform type of a first waveform area according to the first information.

6. The method of claim 5, wherein for a Type-1 CG-PUSCH or a Type-2 CG-PUSCH, a bit indicating the UL shared channel waveform type is read from the first information during initial transmission according to a waveform type indication start position and a waveform type indication bit length that are indicated by a higher-layer signaling, and a UL shared channel waveform type of the CG-PUSCH is determined.

7. The method of claim 5, wherein a start position of the first waveform area is after a last symbol of the first information, or the start position of the first waveform area is after a last symbol of a first symbol group after the last symbol of the first information.

8. The method of claim 7, wherein the first symbol group is higher-layer signaling indication; or the first symbol group is terminal capability reporting information; or a length of the first symbol group is a first value, and the first value is a preset fixed value.

9. The method of claim 5, wherein a length of the first waveform area is a first length, wherein
the first length is a length configured by higher-layer signaling indication; or
the first length is a preset fixed value.

10. The method of claim 1, wherein
the first information is the DCI, the first information comprises a waveform type indication field, a value of a frequency-domain resource assignment field of the first information is a first preset value, and the first preset value indicates that the first information is DCI indicating the UL shared channel waveform type; and
determining the UL shared channel waveform type according to the received first information comprises:
determining the UL shared channel waveform type according to a value of the waveform type indication field of the first information.

11. The method of claim 1, wherein for a Type-1 CG-PUSCH or a Type-2 CG-PUSCH, a UL shared channel waveform type of the CG-PUSCH is determined according to a retransmission time of the CG-PUSCH during retransmission.

12. The method of any one of claims 1 to 11, wherein for different UL shared channel waveform types, a length of an indication field in DCI for scheduling data transmission is the same, wherein the length of the indication field is a maximum bit length among bit lengths corresponding to the different UL shared channel waveform types, and the indication field comprises at least one of a precoding information and number of layers field, a phase tracking reference signal-demodulation reference signal (PTRS-DMRS) association field, or an antenna port field.

13. The method of any one of claims 1 to 11, wherein for different UL shared channel waveform types, a total length of DCI for scheduling data transmission is the same.

14. The method of claim 1, wherein
the first information is the MAC-CE, and the first information at least comprises a first bit corresponding to a first cell; and
determining the UL shared channel waveform type according to the received first information comprises:
determining, according to the first bit, a UL shared channel waveform type adopted for a current bandwidth part (BWP) of the first cell.

15. The method of claim 14, wherein
the first information at least further comprises a second bit corresponding to a second cell; and
determining the UL shared channel waveform type according to the received first information further comprises:
determining, according to the second bit, a UL shared channel waveform type adopted for a current BWP of the second cell.

16. The method of claim 1, wherein
the first information is the MAC-CE, the first information at least contains a first cell identifier (ID), a first BWP ID, and first waveform type indication information, and a BWP corresponding to the first BWP ID is a BWP of a cell corresponding to the first cell ID; and
determining the UL shared channel waveform type according to the received first information comprises:
determining, according to the first waveform type indication information, the first cell ID, and the first BWP ID, a UL shared channel waveform type of the BWP corresponding to the first BWP ID of the cell corresponding to the first cell ID.

17. The method of claim 16, wherein
the first information at least further contains a second BWP ID and second waveform type indication information, and a BWP corresponding to the second BWP ID is a BWP of the cell corresponding to the first cell ID; and
determining the UL shared channel waveform type according to the received first information further comprises:
determining, according to the second waveform type indication information and the second BWP ID, a UL shared channel waveform type of the BWP corresponding to the second BWP ID of the cell corresponding to the first cell ID.

18. The method of claim 1, wherein
the first information is the MAC-CE, and the first information at least contains a first cell ID and first waveform type indication information; and
determining the UL shared channel waveform type according to the received first information comprises:
determining, according to the first waveform type indication information and the first cell ID, UL shared channel waveform types of all BWPs of a cell corresponding to the first cell ID.

19. A method for an uplink (UL) shared channel waveform configuration, performed by a base station (BS) and comprising:
outputting first information, wherein the first information indicates a UL shared channel waveform type, the first information is downlink control information (DCI) or a media access control-control element (MAC-CE), and the UL shared channel waveform type comprises discrete Fourier transform-spread-orthogonal frequency division multiplexing (DFT-s-OFDM) and cyclic prefix orthogonal frequency division multiplexing (CP-OFDM).

20. The method of claim 19, wherein the first information is DCI for scheduling data transmission, and a time-domain resource assignment field of the first information contains indication information indicating the UL shared channel waveform type.

21. The method of claim 19, wherein
the first information is group common DCI containing a radio network temporary identifier (RNTI), wherein the RNTI identifies that the first information is group common DCI indicating the UL shared channel waveform type; and
the first information indicates a UL shared channel waveform type of a first waveform area.

22. The method of claim 19, wherein
the first information is the DCI, the first information comprises a waveform type indication field, a value of a frequency-domain resource assignment field of the first information is a first preset value, and the first preset value indicates that the first information is DCI indicating the UL shared channel waveform type; and
the waveform type indication field of the first information indicates the UL shared channel waveform type.

23. The method of claim 19, wherein
the first information is the MAC-CE, and the first information at least comprises a first bit corresponding to a first cell; and
the first bit indicates a UL shared channel waveform type adopted for a current bandwidth part (BWP) of the first cell.

24. The method of claim 23, wherein
the first information at least further comprises a second bit corresponding to a second cell; and
the second bit indicates a UL shared channel waveform type adopted for a current BWP of the second cell.

25. The method of claim 19, wherein
the first information is the MAC-CE, the first information at least contains a first cell identifier (ID), a first BWP ID, and first waveform type indication information, and a BWP corresponding to the first BWP ID is a BWP of a cell corresponding to the first cell ID; and
the first waveform type indication information indicates a UL shared channel waveform type of the BWP corresponding to the first BWP ID of the cell corresponding to the first cell ID.

26. The method of claim 25, wherein
the first information at least further contains a second BWP ID and second waveform type indication information, and a BWP corresponding to the second BWP ID is a BWP of the cell corresponding to the first cell ID; and
the second waveform type indication information indicates a UL shared channel waveform type of the BWP corresponding to the second BWP ID of the cell corresponding to the first cell ID.

27. The method of claim 19, wherein
the first information is the MAC-CE, and the first information at least contains a first cell ID and first waveform type indication information; and
the first waveform type indication information indicates UL shared channel waveform types of all BWPs of a cell corresponding to the first cell ID.

28. An electronic chip, comprising:
a processor configured to execute computer program instructions stored in a memory, wherein the computer program instructions, when executed by the processor, trigger the electronic chip to perform the method of any one of claims 1 to 18.

29. An electronic chip, comprising:
a processor configured to execute computer program instructions stored in a memory, wherein the computer program instructions, when executed by the processor, trigger the electronic chip to perform the method of any one of claims 19 to 27.

30. An electronic device, comprising:
a communication apparatus;
a memory configured to store computer program instructions; and
a processor configured to execute the computer program instructions which, when executed by the processor, trigger the electronic device to perform the method of any one of claims 1 to 18.

31. An electronic device, comprising:
a communication apparatus;
a memory configured to store computer program instructions; and
a processor configured to execute the computer program instructions which, when executed by the processor, trigger the electronic device to perform the method of any one of claims 19 to 27.

32. A computer-readable storage medium configured to store a computer program which, when executed on a computer, causes the computer to perform the method of any one of claims 1 to 27.
